# EUROPEAN PATENT APPLICATION

(11) **EP 4 397 531 A1**
(43) Date of publication of application: **10.07.2024**
(21) Application number: 24150122.0
(22) Date of filing: 02.01.2024
(51) Int. Cl.: B60L 53/16, B60L 53/37

(54) **A SYSTEM AND METHOD FOR A CHARGING ASSEMBLY**

(30) Priority: 05.01.2023 US 202363437256 P; 05.01.2023 US 202363437268 P; 06.02.2023 US 202363443627 P; 08.12.2023 US 202318534190; 08.12.2023 US 202318534247; 08.12.2023 US 202318534358
(71) Applicant: Transportation IP Holdings, LLC, Norwalk, CT 06851 (US)
(72) Inventor: Schmidt, Timothy Robert, Norwalk, 06851 (US); Gallant, Robert, Norwalk, 06851 (US); Kobel, Karl, Norwalk, 06851 (US); Emelogu, Ikechi Olakunle, Norwalk, 06851 (US)
(74) Representative: Worthington, Richard Easton

(57) **Abstract**

A charging assembly is provided and may include a charging head, an actuator, a linkage, and a connection portion. The charging head may selectively engage a charging contact of a vehicle. The actuator may drive an upper arm. The linkage may be extendable and retractable and may be driven by one or more of the actuator or a weight of the charging assembly. The connection portion may selectively couple the actuator and the upper arm. The connection portion may engage the actuator and the upper arm while the charging head is not engaging the vehicle and allow a torque from the actuator to move the charging head in a vertical direction. The connection portion may disengage the actuator from the upper arm while the charging head engages the vehicle and allow a force from the weight of the charging assembly to move the charging head in a horizontal direction.

## Description

### CROSS-REFERENCE TO RELATED APPLICATIONS

This application claims priority to U.S. Provisional Application No. 63/437,256, filed on January 05, 2023, U.S. Provisional Application No. 63/437,268, filed on January 05, 2023, and U.S. Provisional Application No. 63/443,627, filed on February 06, 2023, the entire disclosures of which are incorporated herein by reference.

### BACKGROUND

### Technical Field.

The present disclosure generally relates to systems and methods for a charging assembly.

### Discussion of Art.

Some vehicles, such as buses, cars, trucks, trains, etc., may be powered by electric current obtained from a power source. The power source may be onboard the vehicle or offboard the vehicle. Where the vehicle is powered by an onboard power source, the onboard power source may need to receive power or be charged by an offboard power source. To charge the vehicle, a connector wire may be connected from the offboard power source to the vehicle. However, such a "plug-in" method of charging may be difficult and time consuming to connect.

Other charging methods may exist that do not require a plug-in charge. For example, the vehicle may have a charging contact that may engage an offboard charging head. The offboard charging head may be a pantograph, a conductive shoe, a conductive pathway, or the like.

The offboard charging head may be positioned at a charging station along a route of the vehicle, for example at a vehicle stop or vehicle depot. The charging station along the route may allow for charging that may deliver small duration charges to the vehicle while the vehicle may be stopped at an in-route stop. The charging may allow for extended range of the vehicle.

When the vehicle approaches the charging station, the vehicle may need to be in a specific position to align with the charging head to receive the charge. If the vehicle is not properly aligned with the charging head, the vehicle may need to move to realign with the charging head. However, this may not be desirable if there are other vehicles around the vehicle to be charged, for instance.

The charging head may include plug-in connectors that may be manually aligned with the charging contact of the vehicle. However, this may be a manual process that may require input from an operator of the vehicle. The operator may have to exit the vehicle to secure the connectors to the charging contact. The manual nature of the process may not be conducive to in-route charging.

In one example, the charging head may be moved to align with the charging contact of the vehicle. The charging head may be moved vertically (i.e., up or down) to engage the charging contact of the vehicle. In another example, the charging head may be moved laterally to engage the charging contact of the vehicle. However, adjusting the charging head in both planes (e.g., vertically and laterally) may require a more complex and more expensive mechanism for movement and actuation of the charging head.

It may be desirable to have a system and method that differs from those that are currently available.

### BRIEF DESCRIPTION

In accordance with one example or aspect, a charging assembly may include a charging head, an actuator, a linkage, and a connection portion. The charging head may selectively engage a charging contact of a vehicle. The actuator may drive an upper arm. The connection portion may selectively couple the actuator and the upper arm. The linkage may be extendable and retractable in length. The linkage may be driven by one or more of the actuator and a weight of the charging assembly. The connection portion may engage the actuator and the upper arm while the charging head is not engaging the vehicle. The connection portion may allow a torque from the actuator to move the charging head in a substantially vertical direction. The connection portion may disengage the actuator from the upper arm while the charging head engages the vehicle. The connection portion may allow a force from the weight of the charging assembly to move the charging head.

In accordance with one example or aspect, a method of moving a charging assembly to engage a vehicle may include driving an upper arm of the charging assembly with an actuator. The method may include moving a lower arm and a linkage using one or more of the actuator or a weight of the charging assembly. The method may include engaging the actuator with the upper arm using a connection portion while the charging head is not engaging the vehicle to allow a vertical movement of a charging head of the charging assembly. The method may include disengaging the actuator and the upper arm using the connection portion while the charging head is engaging the vehicle to allow a mechanical stop to limit the motion of the charging head independent of the actuator while the charging head is engaging the vehicle.

In accordance with one example or aspect, a charging assembly may include a charging head, an actuator, and a connection portion. The charging head may selectively engage a charging contact of a vehicle. The actuator may selectively drive an upper arm. The connection portion may selectively couple the actuator and the upper arm. The connection portion may couple the actuator and the upper arm while the charging head is not engaging the vehicle. The connection portion may allow a torque from the actuator to move the charging head in a substantially vertical direction. The connection portion may decouple the actuator from the upper arm while the charging head engages the vehicle. The connection portion may allow a force from a weight of the charging assembly to move the charging head.

### BRIEF DESCRIPTION OF THE DRAWINGS

The subject matter may be understood from reading the following description of non-limiting embodiments, with reference to the attached drawings, wherein below:
Figure 1 shows a charging system including a charging assembly for charging a vehicle, shown in a coupled position, according to one example;
Figure 2 shows a charging system including a charging assembly for charging a vehicle, shown in a stowed position, according to one example;
Figure 3 shows a charging system including a charging assembly for charging a vehicle, shown in a misaligned position, according to one example;
Figure 4 shows a charging system including a charging assembly for charging a vehicle, shown in a coupled position, according to one example;
Figure 5 shows a charging system including a charging assembly for charging a vehicle, shown in a coupled position, according to one example;
Figure 6 shows the charging system and the charging assembly, according to one example;
Figure 7 shows the charging system and the charging assembly of Figure 6, according to one example;
Figure 8 shows the charging system and the charging assembly of Figure 6, according to one example;
Figure 9 shows the charging system and the charging assembly of Figure 6, shown in a coupled position, according to one example;
Figure 10 shows the charging system and the charging assembly of Figure 6, shown in a stowed position, according to one example;
Figure 11 shows a flow chart of a method of moving a charging assembly to engage a vehicle, according to one example;
Figure 12 shows a charging system including a charging assembly for charging a vehicle, according to one example;
Figure 13 shows a charging system including a charging assembly for charging a vehicle, according to one example
Figure 14 shows a charging system including a charging assembly for charging a vehicle, according to one example
Figure 15 shows a charging system including a charging assembly for charging a vehicle, according to one example
Figure 16 shows a charging system including a charging assembly for charging a vehicle, according to one example;
Figure 17 shows a flow chart of a method of moving a charging assembly to engage a vehicle, according to one example; and
Figure 18 shows a functional block diagram of an example neural network that can be used by a charging system, according to one example.

### DETAILED DESCRIPTION

Examples of the subject matter described herein relate to a charging assembly. Specifically, a charging assembly that may include a charging head that may be selectively engage a charging contact of a vehicle. The charging assembly may be coupled to a structural member, for example a ceiling of a vehicle depot or stop. In one example, the charging assembly may be coupled to a vehicle, for example a charging vehicle. The charging head may move in multiple directions to engage the charging contact of the vehicle.

The charging assembly may be at a vehicle depot or at a vehicle stop along a route of the vehicle, such that the charging assembly may allow for charging that may deliver charges to the vehicle while the vehicle may be stopped at an in-route stop. The charging may allow for extended range of the vehicle. The charging assembly may be coupled with a charging vehicle, such that the charging assembly may be movable to deliver charges to the charging contacts at various locations.

When the vehicle approaches the charging assembly, the vehicle may need to align with the charging head to receive the charge. If the vehicle is not aligned with the charging head of the charging assembly, the vehicle may need to move to realign with the charging head. However, this may not be desirable, for example if there are other vehicles, people, or objects around the vehicle to be charged.

The charging head of the charging assembly may be able to move in multiple directions (e.g., vertically, horizontally, diagonally, etc.) to align with the charging contacts of the vehicle. The charging assembly may include one or more arms and an actuator that may move the charging assembly. The actuator may be a motor, an electromagnetic actuator, a pneumatic actuator, a hydraulic actuator, or the like. The actuator may move the charging head between a charging position and a non-charging position with respect to the charging contacts.

A benefit of the charging assembly described may be a simpler and more cost-effective means to allow for adjustment of a charging head selectively engaging a charging contact, specifically adjustment of the charging head in multiple directions.

While one or more embodiments are described in connection with a bus, other embodiments are not connected to buses. Unless expressly disclaimed or stated otherwise, the subject matter described herein extends to automobiles, trucks (with or without trailers), buses, trains, marine vessels, aircraft, unmanned aircraft (e.g., drones), mining vehicles, agricultural vehicles, or other off-highway vehicles. The vehicles described herein may be formed from a single vehicle or multiple vehicles. With respect to multi-vehicle systems, the vehicles may be mechanically coupled with each other (e.g., by couplers) or logically coupled but not mechanically coupled. For example, vehicles may be logically but not mechanically coupled when the separate vehicles communicate with each other to coordinate movements of the vehicles with each other so that the vehicles travel together (e.g., as a convoy).

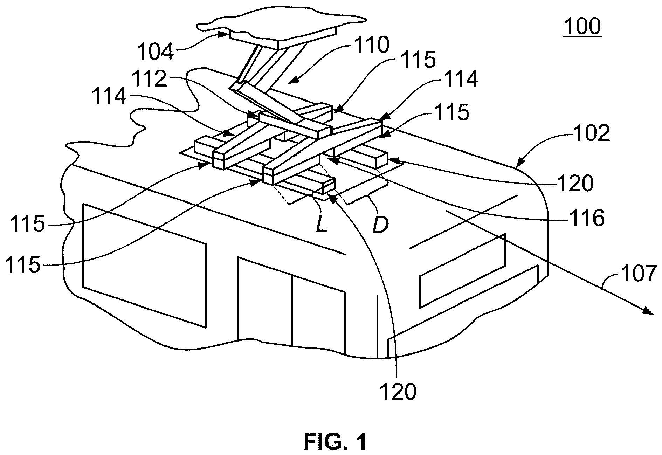

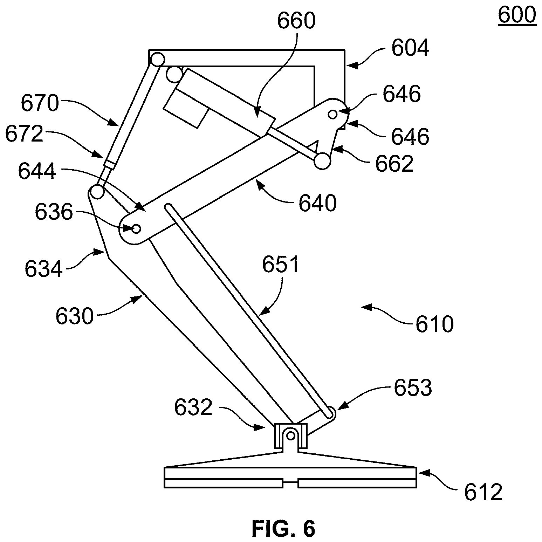

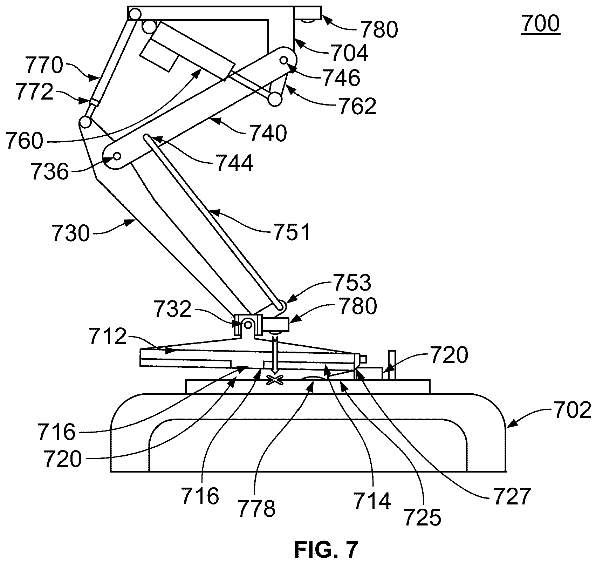

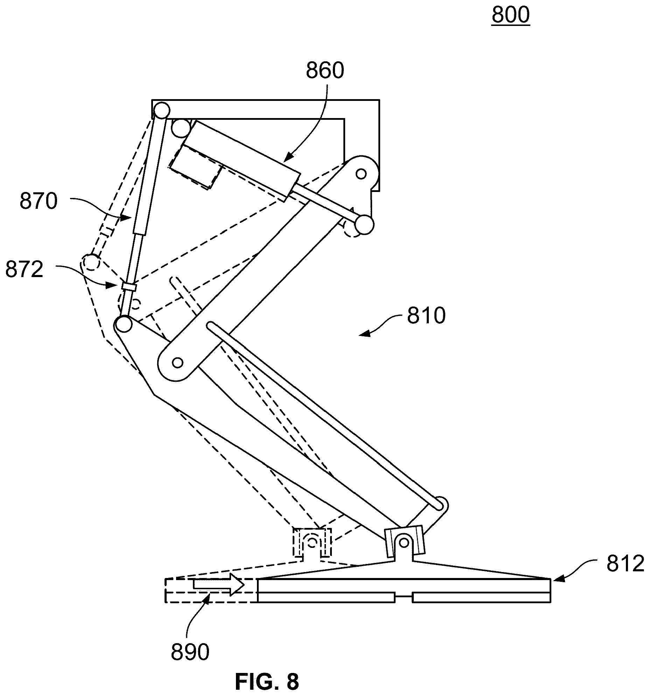

The Figures may show similar charging systems and charging assemblies. The charging systems and charging assemblies may be in different positions or orientations. For brevity, each component may not be discussed with respect to each Figure. Additionally, each component may not be labeled in each Figure, for ease of viewing. Like references may be given the same trailing digits with different first digits corresponding to the Figure number, for example reference 110 of Figure 1 may correspond to reference 610 of Figure 6, reference 710 of Figure 7, and reference 810 of Figure 8.

Figure 1 illustrates a charging system 100 that may include a charging assembly 110 for charging a vehicle 102, shown in a coupled position, according to one example. The charging assembly may be coupled to a surface 104. In one example, the surface may be an overhead structural member, such as a ceiling or roof of a vehicle stop or vehicle depot. In one example the surface may be a purpose-built structure along a route on which the vehicle travels. The surface may be coupled with a charging vehicle, such that the charging assembly may be mobile and may move to the vehicle in need of charging. The charging assembly may receive energy from an external source to charge the vehicle. For example, the external source may provide an electric current to the charging assembly, such as powered rails, catenaries, and the like.

The charging assembly may include a charging head 112 that may raise or lower to engage one or more charging contacts 120 of the vehicle. The charging head may include one or more charging bars 114 to engage the charging contacts of the vehicle. In one example, the charging bars may be conductor bars and the charging contacts may be conductive contacts. In one example, the charging bars may be oriented substantially perpendicular to the charging contacts. The charging head may have one charging bar, two charging bars, or more than two charging bars. Where there are two or more charging bars, the charging bars may include a gap 116 between each adjacent charging bar. The charging bars may be oriented generally perpendicular to a direction 107 of movement of the vehicle. The elongated charging bars may allow the vehicle to be misaligned from a target position or a preferred position in a lateral direction and may still allow proper contact for charging.

The charging contacts may include conductive rails. The charging contacts may be elongated along the vehicle generally parallel to the direction of movement of the vehicle. The charging contacts may include a positive connection and a negative connection. The elongated charging contacts may allow the vehicle to be misaligned from the target position in the direction of movement of the vehicle and may still allow proper contact with the charging head for charging. Where both the charging contacts may be elongated and the charging bars may be elongated, the charging assembly may allow misalignment from the target position in both the lateral direction and the direction of movement of the vehicle, while still allowing proper contact of the charging contacts and the charging bars.

In one example, the charging bars may be split into four portions 115, as shown in Figure 1. The four portions may be used for positive charging, positive sensing, negative charging, and negative sensing. The positive and negative sensing bars may determine whether a proper or correct connection may have been made with the charging contacts. The positive and negative sensing bars may monitor charging progress, may identify issues in charging, or the like. The sensing bars may include one or more sensors, discussed further below. The charging and sensing bars may be sized such that a length L of each portion is less than a distance D between the charging contacts. The length of the charging and sensing bars being less than the distance between the charging contacts may prevent the potential that a misalignment could cause the charging or sensing bars from contacting both the positive connection and the negative connection and create a short circuit.

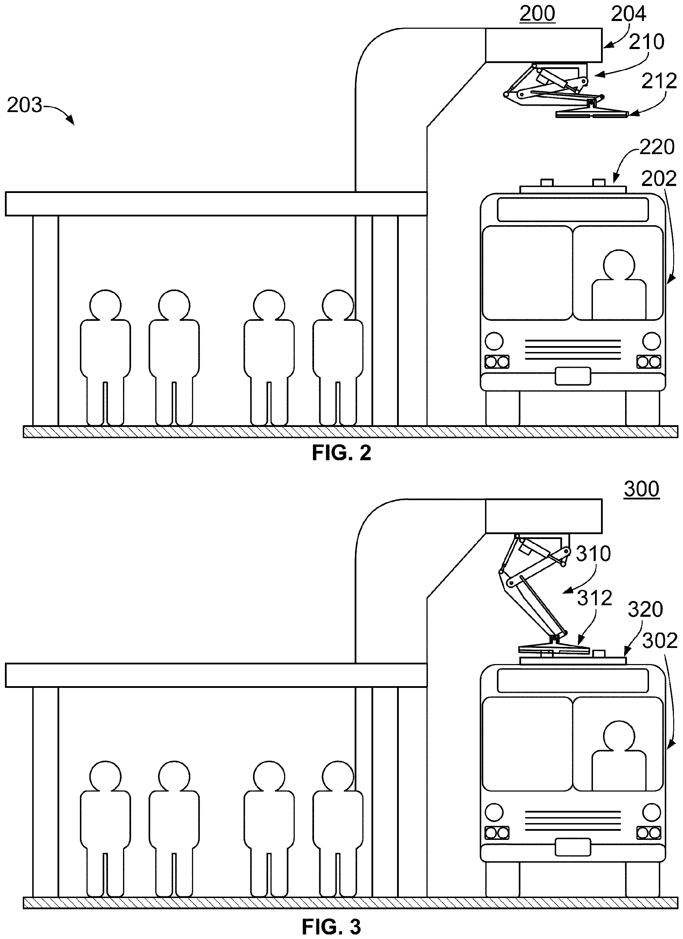

Figure 2 shows a charging system 200 that may include a charging assembly 210 for a charging a vehicle 202, shown in a stowed position, according to one example. The vehicle may be approaching or stopped at a stop along a route travelled by the vehicle, for example a vehicle depot 203 or a vehicle stop. The charging assembly may be mounted to an overhanging portion 204 of the vehicle depot. The vehicle may include charging contacts 220 that may receive an electric current to charge a power source of the vehicle. In one example, the charging contacts may receive a charging current from a charging head 212 of the charging assembly.

The power source may include a battery bank comprised of a number of batteries, a fuel cell, a flywheel, or the like. The power source may provide direct current energy to components of the vehicle. Other arrangements of power sources, including prime movers, batteries, and/or other power sources are possible. For example, power may be provided by a hybrid system that includes the collection of energy from activities such as regenerative braking. Or, as another example, power may be provided from a generator to inverters and/or other portions of the vehicle. The power source may represent one or more sources of current, with the sources being the same type (e.g., batteries or generators or external sources) or different types (e.g., batteries and a generator).

The stowed charging assembly may allow for the vehicle to approach and stop underneath the charging assembly at the vehicle depot, at a stop along the route of the vehicle, at a charging station, or the like. While the charging assembly is in the stowed position, as illustrated in Figure 2, or while the charging assembly may be in motion but not in contact with the charging contacts, no electrical power may be applied to the charging head. Once the charging head may be positioned in contact with the charging contacts of the vehicle, the positive and negative sensing bars may determine that a correct connection has been made and may monitor charging progress. Once the sensing bars determine the correct connection has been made, electrical power may be applied through the charging bars to charge the vehicle. Once the vehicle may be fully charged or the vehicle may be ready for departure, electrical power may be removed from the charging bars and the charging head may be moved to the stowed position.

Figure 3 shows a charging system 300 that may include a charging assembly 310 for charging a vehicle 302, shown in a misaligned position, according to one example. Once the vehicle may be in position underneath the charging assembly, the charging assembly may be lowered to engage the vehicle. Once contact may be made with the vehicle, one or more sensors may determine whether a charging connection may have been made between a charging head 312 and charging contacts 320 of the vehicle. As illustrated in Figure 3, the charging head may be positioned over only a portion of the charging contacts and thus may not provide a charging connection to charge the vehicle. The one or more sensors may determine that a charging connection has not been made based on the misalignment. As discussed further below, the sensors may include visual sensors, electrical sensors, mechanical sensors, or the like. Based on the misalignment, the charging head may need to be moved, for example, in a lateral direction, to establish a charging connection between the charging head and the charging contacts. The charging head may be moved such that the charging head may be engaging both charging contacts of the vehicle to provide a charging connection.

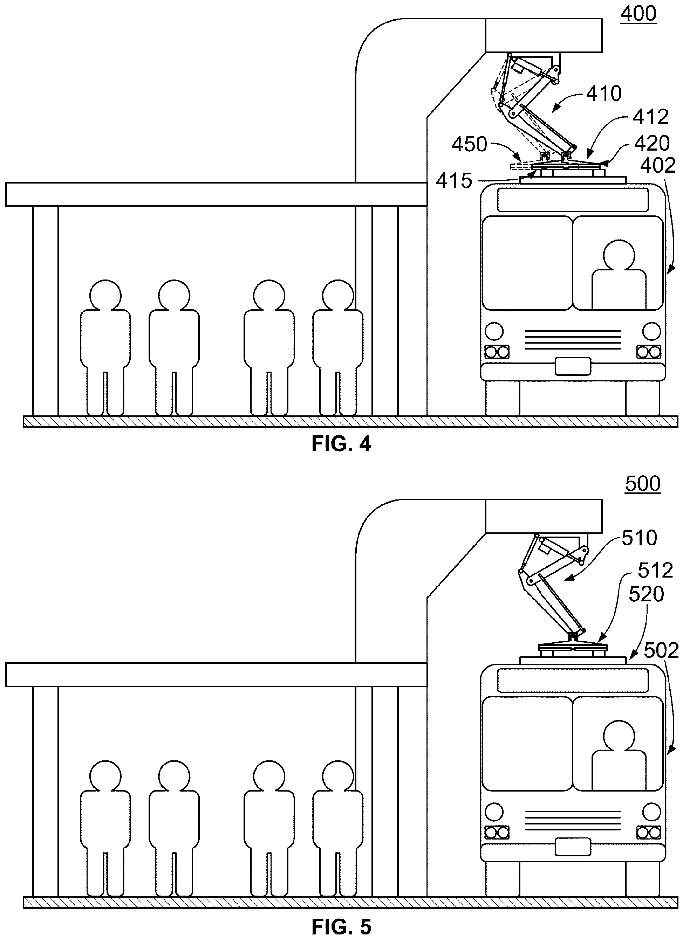

Figure 4 shows a charging system 400 that may include a charging assembly 410 for charging a vehicle 402, shown in a coupled position, according to one example. A charging head 412 may be moved in a lateral direction from a misaligned position 450 (shown with dotted lines) to an aligned position (shown with solid lines) to establish a charging connection. The aligned position may be where charging bars 415 of the charging heads may engage charging contacts 420 of the vehicle. The charging assembly may directed to move by an operator of the vehicle, a controller, or the like.

The charging head may be moved in a lateral direction using an actuator. The actuator and further discussion of the movement of the charging head will be discussed below with respect to Figures 6-10.

Figure 5 shows a charging system 500 including a charging assembly 510 for a charging a vehicle 502, shown in a coupled position, according to one example. The charging assembly may include a charging head 512 that may raise or lower to engage one or more charging contacts 520 of the vehicle. Additionally, the charging head may move in a lateral, diagonal, or other direction to engage the charging contacts. The charging head may include one or more charging bars 514 to engage the charging contacts of the vehicle.

Once the charging connection may have been established, the actuator may be turned off, and charging may be allowed to proceed. The actuator may be driven by a motor. The actuator may include a rotary motor actuator, however in other examples, the actuator may include a linear motor actuator, an electromechanical actuator, electrohydraulic actuator, a pneumatic actuator, or the like. In one example, the actuator may include an electric motor, a stepper motor, a telescopic hydraulic cylinder, a pulley, or the like. The actuator may provide controlled movements to, and positioning of, the charging head. The actuator may act as a prime mover driving the charging head between a charging position and a non-charging position.

One or more sensors may monitor electrical or physical characteristics of at least one of the charging heads, the charging contacts, and the vehicle. The sensors may include electrical sensors or mechanical sensors. The sensors may measure characteristics related to the charging head, the charging contacts, the vehicle, or a combination of components. The electrical sensors may include an ohmmeter measuring electrical resistance, a voltmeter measuring electrical potential in volts, an impedance analyzer measuring impedance, an ammeter measuring current, a database or memory, an input device (e.g., control panel, switch, keyboard, etc.), or the like. The electrical sensors may read the electrical characteristics of components of the charging system, for example the actuator or a charging connection between the charging head and the charging contacts. The mechanical sensor may include an optical sensor (e.g., an infrared sensor, a proximity detector, a camera), an acoustic sensor (e.g., an ultrasonic sensor), a capacitive sensor, a photoelectric sensor, an inductive sensor, a laser distance sensor (e.g., Light Detection and Raging ["LIDAR"]), or the like. The mechanical sensors may measure physical characteristics components of the charging system.

A visual sensor, for example a camera, may be positioned in view of the charging contacts and/or the charging head. The visual sensor may be able to identify debris or contaminants on one or both of the charging contacts or the charging head. When debris or contaminants are detected, the controller may direct the charging head to move laterally back and forth to clean the debris or contaminants to improve the connection strength. When debris or contaminants may be detected, the controller may log the data in a log for predictive maintenance or alert maintenance personnel of the need for intervention. The visual sensor may utilize machine learning or artificial intelligence ("AI") to identify debris or contaminants.

Additionally, the visual sensor may provide feedback to an operator of the vehicle. For example, the visual sensor may provide feedback with respect to the positioning of the vehicle relative to the charging assembly. The feedback may allow the operator to position the vehicle for improved charging connection. In one example, the feedback may be received by a controller of the vehicle which may autonomously correct the position of the vehicle for improved charging. The visual sensor may scan, read, or otherwise identify an identifying marker. Theis identifying marker can be indicia printed on a the vehicle, the charging contact, a wayside device, or the like. The identifying marker may be associated with a position of the charging head relative to the charging contacts.

The sensors may be coupled to the charging assembly, the vehicle, a wayside or offboard position, or the like. Additionally, sensors may be coupled to one or more positions. In one example, the sensor may be a camera on the charging head that may be able to read the position of a target, discussed below.

The charging assembly may include a controller that may send a control signal to the actuator. The control signal may direct the activation or deactivation of actuator, as well as the movement of the charging head. The controller may be positioned on or within the charging assembly or may be positioned remotely from the charging assembly. The controller may include microcontrollers, processors, microprocessors, or other logic devices that operate based on instructions stored on a tangible and non-transitory computer readable storage medium, such as software applications stored on a memory.

If a system, apparatus, assembly, device, etc. (e.g., a controller, control device, control unit, etc.) includes multiple processors, these processors may be located in the same housing or enclosure (e.g., in the same device) or may be distributed among or between two or more housings or enclosures (e.g., in different devices). The multiple processors in the same or different devices may each perform the same functions described herein, or the multiple processors in the same or different devices may share performance of the functions described herein. For example, different processors may perform different sets or groups of the functions described herein.

The charging system may allow charging of the vehicle until a predetermined electrical characteristic may be met, for example capacity of an energy storage device of the vehicle. The charging system may utilize feedback from the monitoring sensors as part of the charging controls to improve the safety, reliability, and performance of the system. For example, the sensors may measure a voltage, current, resistance, or potential of one or more of the charging head and the charging contacts and may communicate the measured characteristic to the controller. The controller may then use the measured characteristic to make determinations about the charging status, as well as improvements to the charging. The sensors may be used to detect an incorrect or partial connection that may trigger an alert or fault condition. The sensors may be used to detect a poor connection and control wiping actions to improve contact or alert maintenance personnel that other maintenance is required. For example, where a measured voltage may be below a predetermined threshold, the charging connection may be determined to be poor. The poor connection may be a result of debris or buildup on the charging contacts and/or the charging head. The controller may direct wiping of the charging head against the charging contacts to remove debris and/or buildup and improve the charging connection.

The outputs from the sensors may be used to alert maintenance personnel to potential trends that may require attention. In one example, the vehicle may be charged for a predetermined amount of time. The predetermined amount of time may be the amount of time required for a full charge, the amount of time required for a partial charge, the amount of time required for a given stop, or the like. Once the charging may be terminated, the charging assembly may raise the charging head and the vehicle may continue along the route.

In one example, the charging system may allow charging of the vehicle until a predetermined electrical characteristic may be met, for example capacity of an energy storage device of the vehicle. The charging system may utilize feedback from the monitoring sensors as part of the charging controls to improve the safety, reliability, and performance of the system. The sensors may be used to detect an incorrect connection that may trigger an alert or fault condition. The sensors may be used to detect a poor connection and control wiping actions to improve contact or alert maintenance personnel that other maintenance is required. The sensors may be used to alert maintenance personnel to potential trends that may require attention. In one example, the vehicle may be charged for a predetermined amount of time. The predetermined amount of time may be the amount of time require for a full charge, the amount of time require for a partial charge, the amount of time required for a given stop, or the like. Once the charging may be terminated, the charging assembly may raise the charging head and the vehicle may continue along the route.

Figure 6 illustrates a charging system 600 including a charging assembly 610, according to one example. The charging assembly may include a charging head 612 that may be moveable to engage a charging contact, for example a charging contact of a vehicle. The charging assembly may include a mounting portion 604 opposite the charging head. The mounting portion may be coupled with a structural member, for example a ceiling of a vehicle depot or a vehicle stop. In one example, the mounting portion may be coupled to a purpose-built structure along a route of the vehicle.

The charging assembly may include a lower arm 630 and an upper arm 640 positioned between the mounting portion and the charging head. The lower arm may be coupled at a lower end 632 to the charging head and at an upper end 634 to the upper arm. The upper end of the lower arm may be coupled with the upper arm with a first joint 636. In one example, the first joint may be a rotary joint, a pin joint, a ball joint, a prismatic joint, a cotter pin joint, or the like.

The upper arm may be coupled at an upper end 646 to the mounting portion and at a lower end 644 to the lower arm. The upper end may include a second joint 646 coupling the upper arm to the mounting portion. In one example, the second joint may be a rotary joint, a pin joint, a ball joint, a prismatic joint, a cotter pin joint, or the like. The upper end may be coupled with an actuator arm 662 that may connect the upper end of the upper arm with an actuator 660.

The charging assembly may include a guide rod 651 that may be coupled to the lower arm and the upper arm. In one example, the guide rod may be coupled to the lower end of the upper arm at one end and coupled to a guide arm 653 positioned at the lower end of the lower arm. The guide rod, the guide arm, the lower arm, and the upper arm may form a four-bar linkage that may generally keep the guide arm at a fixed angle relative to the vehicle during movement of the charging assembly. The guide arm may be coupled to the charging assembly in such a way as to allow limited relative rotation of the charging head. The limitation of rotation may guide the charging head to be generally parallel to a roof of the vehicle but may also allow for the guide arm to not always be parallel to a roof of the vehicle. This may allow the charging assembly to adjust for angular misalignment between the charging head and the charging contacts of the vehicle.

The actuator may move the charging assembly. In one example, the actuator may be a linear motor actuator, however in other examples, the actuator may be an electromechanical actuator, electrohydraulic actuator, rotary motor actuator, a pneumatic actuator, or the like. In one example, the actuator may be an electric motor, a stepper motor, a telescopic hydraulic cylinder, a pulley, or the like. The actuator may provide controlled movements to, and positioning of, the charging head. The actuator may act as a prime mover driving the charging head between multiple positions.

The actuator may provide a pulling force to the actuator arm. The pulling force may provide a counterclockwise torque on the second joint and may pull the upper arm towards the mounting portion. When the actuator may be driven to extend, the arms may be allowed to lower in a controlled manner.

The charging assembly may include a controller that may send a control signal to the actuator. The control signal may direct the activation or deactivation of actuator, as well as the movement of the charging head. The controller may be positioned on or within the charging assembly or may be positioned remotely from the charging assembly. The controller may include microcontrollers, processors, microprocessors, or other logic devices that operate based on instructions stored on a tangible and non-transitory computer readable storage medium, such as software applications stored on a memory.

One or both of the charging assembly and the vehicle may include a communication device. The communication device may communicate with one or more other components of the vehicle, the charging assembly, other vehicles, and/or other remote locations that are off-board the vehicle. The communication device of the charging assembly may communicate with the vehicle, an operator of the vehicle, an offboard source, or the like. The communication device of the vehicle may communicate with the charging assembly, the operator of the vehicle, an offboard source, or the like. The communication device may include or represent an antenna (along with associated transceiver hardware circuitry and/or software applications) for wirelessly communicating with other components of the vehicle or charging assembly. Optionally, the communication device may communicate via one or more wired connections, such as a multiple unit (MU) cable, a trainline, an electrically controlled pneumatic (ECP) brake line, or the like.

In one example, the communication device of the charging assembly and the communication device of the vehicle may communicate information regarding the alignment of the charging head and the charging contacts, the charging connection status, a charge level of a power source of the vehicle, or the like. The communication device may receive the information outputs of the one or more sensors. Additionally, the communication device(s) may be communicatively coupled with the controller. The controller may use the information received from the communication device to move or adjust one or both of the charging head and/or the vehicle.

The charging assembly may include an upper link 670. In one example, the upper link may be coupled to the lower arm, for example at the upper end of the lower arm. In another embodiment, the upper link may be coupled to the upper arm. The upper link may be adjustable in length, for example the upper link may be telescopic, allowing the upper link to extend and retract. The upper link may be a passive linkage, meaning the upper link may require neither power nor active control to move the upper link. In one example, the upper link may be passively driven by the upper arm and the actuator. In another example, the upper link may be passively driven by the lower arm and the actuator. The passive linkage may allow the charging head to be moved in multiple directional planes (e.g., vertically, horizontally, diagonally, or the like) using only one actuator. This may be beneficial to reduce complexity and cost of the charging assembly, while increasing efficiency. In one example, the upper link may be spring biased to require a force to extend or retract away from a stop. In one example, the upper link may be actively driven. For example, the upper link may be driven by an actuator, held from moving or released by a solenoid, or the like.

The upper link may include a stop 672 that may allow the upper link to freely extend or retract to a designated length. The stop may limit movement of the upper link. In one example, the upper link may freely extend, and the stop may limit retraction of the upper link. In another example, the upper link may freely retract, and the stop may limit the extension of the upper link. At the designated length, the stop may allow the upper link to act as a solid compressive member. In one example, the upper link may be a hollow tube concentric with a close-fitting rod. The hollow tube and the close-fitting rod may have threaded ends that may receive joints, for example spherical ball joints, and may provide an end connection. The threaded connection may allow for the stop length to be adjusted as needed during installation.

The upper link may engage the stop to allow torque from the actuator to move the charging head in a substantially vertical direction while the charging head may not be engaging the vehicle. As used herein, substantially vertical may mean the movement is closer to vertical than horizontal. The upper link may move away from the stop such that the torque on the lower arm may move the charging head in a substantially horizontal direction while the charging head may engage the vehicle. As used herein, substantially horizontal may mean the movement is closer to horizontal than vertical. Movement of the charging head in the substantially horizontal direction may allow the charging head to engage the charging contacts of the vehicle. The horizontal motion may result in a beneficial wiping action on the charging contacts with each engagement which may work against surface contaminant buildup to improve the electrical connection. In one example, the wiping motion may improve surface areas of the charging head and the charging contact to more effectively or efficiently transfer power from a power grid to the vehicle, which may improve energy efficiency and energy savings. The upper link may selectively decouple torque on the lower arm. The upper link may apply a torque to the lower arm only in a lifting direction when the upper link is at the designated length.

Additionally, the horizontal motion may result in a beneficial wiping action on the charging contacts with each engagement which may reduce surface contaminant buildup to improve the electrical connection. The wiping action may create friction or an abrasive force that may remove debris from the charging head and/or charging contacts that may reduce the strength of the connection. In one example, the wiping motion may reduce debris and improve the connection of the charging head and the charging contact to more effectively or efficiently transfer power from a power grid to the vehicle, which may improve energy efficiency and energy savings. The controller may direct the wiping action of the charging head to remove the debris for a predetermined amount of time or until an output from the one or more sensors indicates the charging connection may be above a predetermined threshold, indicating a desired charging connection. The upper link may selectively decouple torque on the lower arm. The upper link may apply a torque to the lower arm only in a lifting direction when the upper link is at the designated length.

The charging assembly may be positioned such that the charging assembly may make proper contact with the charging contacts of the vehicle during the initial lowering when the vehicle may be in a leftmost expected position. However, in the event the vehicle may not be in the leftmost position, the charging assembly may move the charging head to properly engage the charging contacts of the vehicle, as discussed below. In another example, the charging assembly may make proper contact with the charging contacts of the vehicle during the initial lowering when the vehicle may be in a central position, a rightmost position, or a position between a leftmost and rightmost position.

Figure 7 illustrates a charging system 700 including a charging assembly 710 for charging a vehicle 702, according to one example. The charging assembly may include a charging head 712 that may raise or lower to engage one or more charging contacts 720 of the vehicle. Additionally, the charging head may move in a lateral, diagonal, or other direction to engage the charging contacts. The charging head may include one or more charging bars 714 to engage the charging contacts of the vehicle.

The charging assembly may include a mounting portion 704 opposite the charging head. The mounting portion may be coupled with a structural member, for example a ceiling of a vehicle depot or a vehicle stop. In one example, the mounting portion may be coupled to a purpose-built structure along a route of the vehicle.

The charging assembly may have two primary modes of motion. While the charging head may not be in contact with the vehicle, the weight of the charging head may apply a clockwise torque on the lower arm that may compress the upper link against the stop and may raise and lower the lower arm. When the vehicle may be in the leftmost position, proper contact of the charging head may be made with the vehicle and charging may occur. However, if the vehicle may be in a more rightward position, the charging assembly may only land on one of the charging contacts of the vehicle, as illustrated in Figure 7.

The charging assembly may include extending ramps, for example a lead-in wedge 727, positioned at one or both ends of the charging head. The lead-in wedge may include a sloped surface that may reduce misalignment of the charging head with the charging contacts. The lead-in wedge may assist in the alignment of the charging head and the charging contacts. In one example, the vehicle may include a spacer 725. The spacer may be positioned adjacent to or nearby one or more of the charging contacts. The spacer may limit the amount that the charging head may rotate during misalignment. The spacer additionally may lead the charging head to the charging contacts. In one example, the spacer may be paired with the lead-in wedge to engage the sloped surface and direct the charging head to the charging contact for proper alignment.

As shown in Figure 7, one or more sensors 780, for example cameras, may be positioned on the charging assembly. The one or more cameras may identify a position of both the charging head and the charging contacts and may help align the charging head and the charging contacts for proper connection. In one example, the camera or other sensor may identify a target 778 that may be positioned on the vehicle. The target may be positioned in proximity to one or more of the charging contacts of the vehicle. The sensor may detect, based on position relative to the target, whether the charging head may be aligned with the charging contacts for proper charging.

In one example, the sensor may be a touch or proximity sensor on the charging head that may detect a target positioned near the charging contact. The target may indicate that the charging head may have reached a correct position relative to the target on the vehicle.

In one example, the one or more sensors may measure a connection strength between the charging head and the charging contacts of the vehicle. The sensors may measure a resistance between the charging bars. If the measured resistance may be above a predetermined threshold, the controller may determine that a connection for charging may have been made between the charging bars and the charging head. If the measured resistance may be below the predetermined threshold, the controller may determine that a sufficient or adequate connection may not have been made between the charging bars and the charging head. For example, a resistance below the threshold may be measured when the charging head contacts a metal roof of a vehicle but does not contact the charging bars.

The charging assembly may engage the stop of the upper linkage responsive to one or more electrical characteristics being below the predetermined threshold and may allow a substantially vertical movement of the charging head. Where the one or more electrical characteristics may be above the predetermined threshold, the passive linkage may move away from the stop and may allow a substantially horizontal movement of the charging head. In one example, the controller may implement responsive actions that may control operation of the charging assembly based on the one or more electrical characteristics.

The sensors that measure the connection strength may be activated responsive to the actuator of the charging assembly being activated. Where the resistance may be measured to be above the predetermined threshold indicating a proper charging connection, the actuator motion may stop, and charging may be initiated. The connection strength may be communicated to a controller or operator of the vehicle. In one example, the connection strength may be communicated in real-time. The connection strength may allow the vehicle operator/controller and/or the charging system to improve safety, reliability, and performance of the charging system.

The charging assembly may include an upper link 770. In one example, the upper link may be coupled to the lower arm, for example at the upper end of the lower arm. In another embodiment, the upper link may be coupled to the upper arm. The upper link may be adjustable in length, for example the upper link may be telescopic, allowing the upper link to extend and retract. The upper link may be a passive linkage, meaning the upper link may require neither power nor active control to move the upper link. In one example, the upper link may be passively driven by the upper arm and the actuator. In another example, the upper link may be passively driven by the lower arm and the actuator. The passive linkage may allow the charging head to be moved in multiple directional planes (e.g., vertically, horizontally, diagonally, or the like) using only one actuator. This may be beneficial to reduce complexity and cost of the charging assembly, while increasing efficiency. In one example, the upper link may be actively driven. For example, the upper link may be driven by an actuator, held from moving or released by a solenoid, or the like.

Figure 8 shows a charging system 800 that may include a charging assembly 810 for charging a vehicle, according to one example. The vehicle is not shown in Figure 8, for simplicity, however it is understood that the charging assembly is contacting the vehicle. The charging system may identify contact with the vehicle and the charging head by a reaction force imparted on the charging head by the vehicle.

As discussed above, the actuator may exert a counterclockwise torque on the upper arm. When the charging head contacts the vehicle, any further counterclockwise torque applied to the upper arm by the actuator may be combined with the reaction force. The combination of forces may result in a counterclockwise torque on the lower arm that may cause the upper link to extend, as shown in Figure 8. The force downward and to the right on the lower arm from the upper arm and a normal force of the charging head may result in a rightward force 890 on the charging head, which may result in a rightward movement of the charging head. The charging head may be moved in a lateral direction from a misaligned position (shown with dotted lines) to an aligned position (shown with solid lines) to establish a charging connection. The aligned position may be where the charging bars of the charging heads may engage the charging contacts of the vehicle.

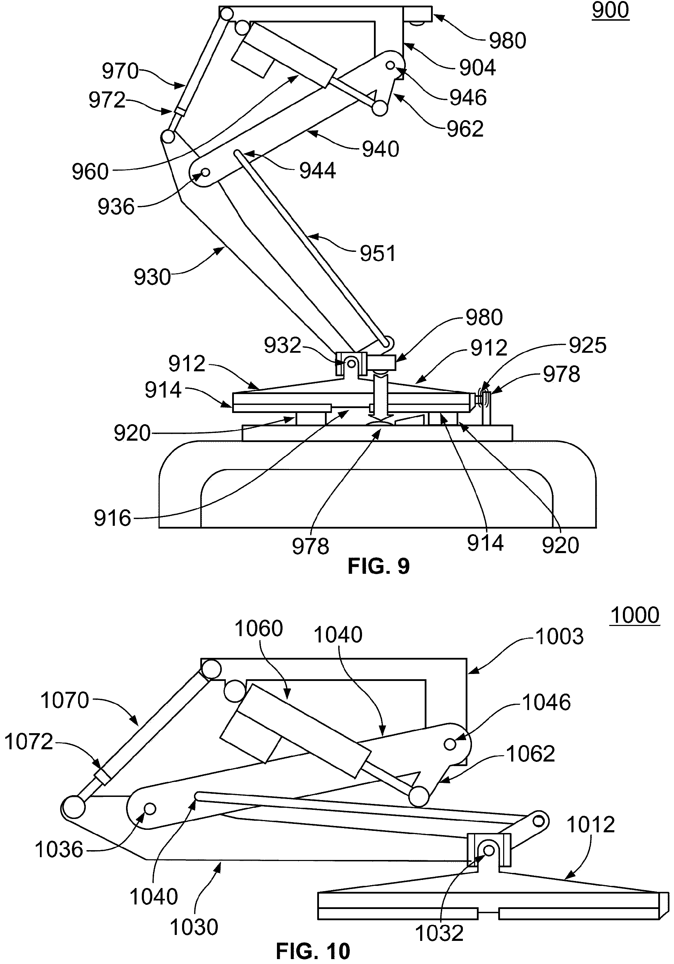

Figure 9 shows a charging system 900 that may include a charging assembly 910 for charging a vehicle 902, shown in a coupled position, according to one example. The charging assembly may include a charging head 912 that may raise or lower to engage one or more charging contacts 920 of the vehicle. Additionally, the charging head may move in a lateral, diagonal, or other direction to engage the charging contacts. The charging head may include one or more charging bars 914 to engage the charging contacts of the vehicle. Where there are two or more charging bars, the charging bars may include a gap 116 between each adjacent charging bar.

The charging system may include one or more sensors 980 and one or more targets 978. The sensors may identify the targets that may be positioned on the vehicle. The target may be positioned in proximity to one or more of the charging contacts of the vehicle. The target may be positioned on an exterior portion of the charging contact, such that the target may function as an outer limit. The sensor may detect, based on position relative to the target, whether the charging head may be aligned with the charging contacts for proper charging.

Where the sensors, operator, and/or controller may determine that the charging head and the vehicle may be in a proper position and may have a proper connection for charging, charging of the vehicle may be initiated.

One or more sensors may measure the connection strength that may be above the predetermined threshold but below a quality charging threshold. When the connection strength may be in a range above the predetermined threshold but below the quality charging threshold, the connection may be impaired. For example, the charging bars or charging contacts may have debris or other contamination impacting the charging connection. Contaminants may degrade the electrical connection of the charging connection, reducing efficiency and increasing required charge times. When the connection may be impaired the controller may direct the system to take steps to improve the connection strength. The controller may send an alert or a message to an operator of the vehicle to inspect the charging bars and/or the charging contacts. Additionally, the controller may direct a camera or other visual sensor to inspect the charging bars and/or the charging contacts responsive to the connection strength being impaired. In one example, the controller may direct the actuator to move the charging head to engage the charging contacts. The controller may then direct the charging head to move laterally in a back and forth direction. The back and forth lateral movement may move the charging head back and forth over the charging contacts, which may remove built up debris and/or contaminants from one or both of the charging contacts or the charging head.

In one example, one or both of the charging bars of the charging head or the charging contacts of the vehicle may include a textured or abrasive surface. The textured or abrasive surface may increase the removal of debris or contamination from one or both of the charging bars and/or the charging contacts.

A sensor may monitor an electrical parameter of the actuator, for example, a current drawn by the actuator, an output of the actuator, or the like. The electrical parameter may be monitored, and changes may be detected that may indicate when the initial contact has been made with the vehicle. This may have the benefit of providing a means to detect when the charging assembly may have transitioned from vertical to horizontal motion. That information may be used to determine when to activate a position sensor or to reduce the possibility of a false positive from an always active position sensor.

Figure 10 shows a charging assembly for charging a vehicle, shown in a stowed position, according to one example. Once the charging of the vehicle may be complete, the charging assembly may then be raised away from the vehicle. The completion of charging may be determined by the one or more sensors, by an operator of the vehicle, based on a predetermined amount of time, or the like. To raise the charging head, the actuator may be activated, and the actuator may begin retraction. An initial force from the actuator may apply a pulling force to pull the charging head horizontally until the upper link may have retracted to the stop point. Once the upper link may have retracted to the stop point, the upper link may produce a torque on the lower arm and may rotate the arm and lift the charging head. In one example, the torque on the lower arm may be a counterclockwise force. The charging assembly may then be moved back into the stowed position.

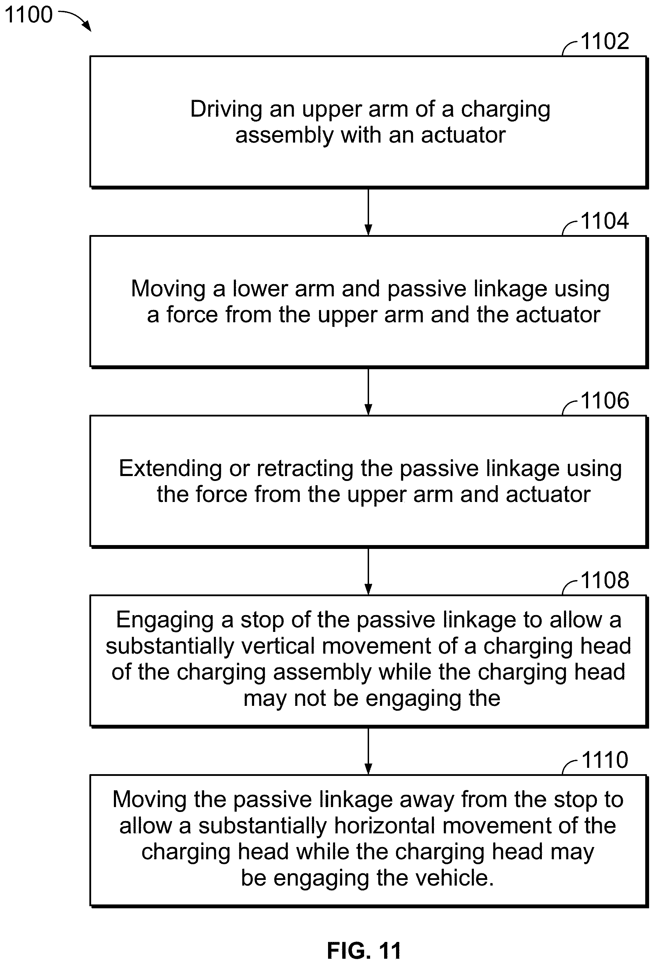

Figure 11 illustrates a flow chart of a method 1100 of moving a charging assembly to engage a vehicle, according to one example. The charging assembly may be coupled to a location along a route of the vehicle, for example a vehicle depot or a vehicle stop. The vehicle may be an automobile, a bus, a train, or the like.

At step 1102, the method may include driving an upper arm of the charging assembly with an actuator. The actuator may be one or more of a linear actuator, a rotary actuator, a pneumatic actuator, an electric actuator, a hydraulic actuator, or the like. In one example, the actuator may be an electric motor, a stepper motor, a telescopic hydraulic cylinder, a pulley, or the like. The actuator may provide controlled movements to, and positioning of, the charging assembly. The actuator may act as a prime mover driving the charging assembly between multiple positions.

At step 1104, the method may include moving a lower arm and a passive linkage using a force from the upper arm and the actuator. In one example, the passive linkage may be telescopic. In one example, the passive linkage may be a hollow tube concentric with a close-fitting rod. The hollow tube and the close-fitting rod may have threaded ends that may receive joints, for example spherical ball joints, and may provide end connection. The threaded connection may allow for the stop length to be adjusted as needed during installation.

At step 1106, the method may include extending or retracting the passive linkage using the force from the upper arm and the actuator. At step 1108, the method may include engaging a stop of the passive linkage to allow a substantially vertical movement of a charging head of the charging assembly while the charging head may not be engaging the vehicle. This may allow the charging head to raise or lower to reach the vehicle.

At step 1110, the method may include moving the passive linkage away from the stop to allow a substantially horizontal movement of the charging head while the charging head may be engaging the vehicle. This may allow the charging head to move laterally or diagonally to align the charging head with charging contacts of the vehicle. The stop may allow the passive linkage to freely extend or retract to a designated length. The stop may limit movement of the passive linkage. In one example, the passive linkage may freely extend, and the stop may limit retraction of the passive linkage. In one example, the passive linkage may freely retract, and the stop may limit the extension of the passive linkage. At the designated length, the stop may allow the passive linkage to act as a solid compressive member.

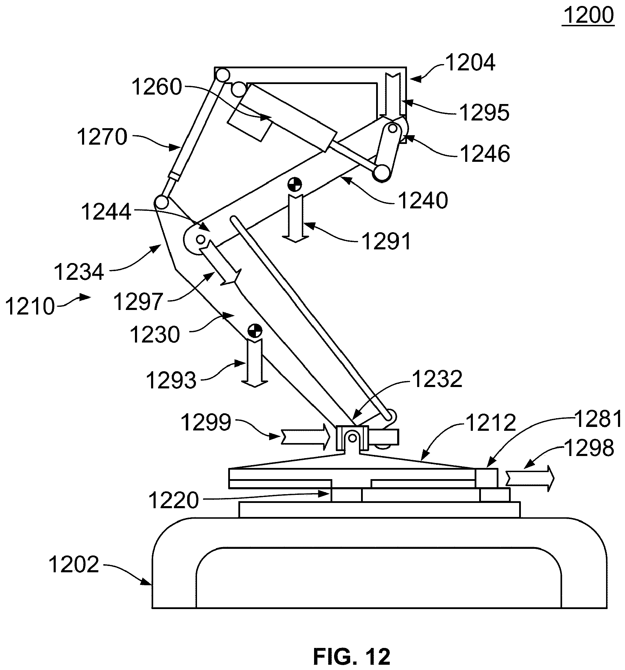

Figure 12 illustrates a charging system 1200 including a charging assembly 1210 for charging a vehicle 1202, according to one example. The charging assembly includes a charging head 1212 that may be moveable to engage a charging contact 1220, for example a charging contact of a vehicle.

The charging assembly may include a lower arm 1230 and an upper arm 1240 positioned between a mounting portion 1204 and the charging head. The lower arm may be coupled at a lower end 1232 to the charging head and at an upper end 1234 to the upper arm.

The upper arm may be coupled at an upper end 1246 to the mounting portion and at a lower end 1244 to the lower arm. The upper end of the upper arm may be coupled with a connection portion. The connection portion may connect the upper end of the upper arm with an actuator 1260. The connection portion may provide a rigid connection which may allow a force from the actuator to move the charging assembly. The connection portion may transmit the force or torque from the actuator to move the upper arm clockwise, but the connection portion will not transmit a torque in a counterclockwise direction. Clockwise and counterclockwise may be defined in reference to the orientation shown in the Figures. In other examples, the connection portion may transmit torque in the counterclockwise direction but not in the clockwise direction. The connection portion may also provide a movable connection to decouple the force from the actuator from moving the charging assembly. The connection portion may act as a lost motion mechanism.

The actuator may move the charging assembly. In one example, the actuator may be a linear motor actuator, however in other examples, the actuator may be an electromechanical actuator, electrohydraulic actuator, rotary motor actuator, a pneumatic actuator, or the like. In one example, the actuator may be an electric motor, a stepper motor, a telescopic hydraulic cylinder, a pulley, or the like. The actuator may provide controlled movements to, and positioning of, the charging head. The actuator may act as a prime mover driving the charging head between multiple positions.

The actuator may provide a pulling force to the connection portion. In one example, the connection portion may couple the force from the actuator with the upper arm. The pull force may pull the upper arm towards the mounting portion. When the actuator may be driven to extend, the arms may be allowed to lower in a controlled manner.

The charging assembly may include one or more sensors that may detect when the actuator may have reached a fully extended position or a fully retracted position. The sensors may be end of stroke sensors such as proximity sensors, position sensors, or the like. A fully retracted sensor may be used to determine the fully retracted position of the actuator. The fully retracted position of the actuator may correspond to a stowed position of the charging assembly. A fully extended position sensor may be used to determine the fully extended position of the actuator. When the actuator may reach the fully extended position, the charging assembly may prevent further extension or movement to prevent damage, such as jamming of internal mechanisms.

The charging assembly may include an upper link 1270. In one example, the upper link may be coupled to the lower arm, for example at the upper end of the lower arm. In another embodiment, the upper link may be coupled to the upper arm. In one example, the upper link may be adjustable in length, for example the upper link may be telescopic, allowing the upper link to extend or retract. The upper link may be a passive linkage, meaning the upper link may require neither power nor active control to move the link. In one example, the upper link may be passively driven by the upper arm and the actuator. In one example, the upper link may be passively driven by the lower arm and the actuator. In one example, the upper link may be driven by a weight of the charging assembly, for example a weight of the charging head, a weight of the upper arm, and a weight of a lower arm. The linkage may allow the charging head to be moved in multiple directional planes (e.g., vertically, horizontally, diagonally) using only one actuator or using only the weight of the charging assembly. This may be beneficial to reduce complexity and cost of the charging assembly, while increasing efficiency.

In one example, the connection portion may couple the actuator and the linkage while the charging head may not be engaging the vehicle. The linkage may allow a torque from the actuator to move the charging head in a substantially vertical direction. When the charging head may reach the vehicle, a back force may be applied from the contact with the vehicle. In response to the back force, the connection portion may actively or passively decouple the force of the actuator from the linkage. Without the force from the actuator, a weight of the charging assembly may still provide a force on the charging assembly. The weight of the charging assembly may include a weight of the upper and lower arms 1291 and 1293, a weight of the charging head, a weight of the charging assembly pulling on a mount 1295. The weight of the charging assembly may provide a contact force with the charging contacts that may provide a downward and a horizontal component 1297. As shown in the figures, the horizontal component may be a rightward horizontal component 1299, however, in other examples, the horizontal component may be a leftward or a diagonal component. The downward force may contribute to the contact force with the charging contacts. The horizontal force may be resisted by frictional forces from the contact with the vehicle. However, the weight of the charging assembly may generate sufficient horizontal force to overcome the frictional resistance. As a note, although the weight of the charging assembly may provide a downward force and a horizontal force, the movement of the charging head may be in a substantially horizontal direction 1298 as the downward force provides the contact force with the charging contacts rather than a vertical movement.

In one example, the charging head may include one or more extensions 1281. The extensions may allow the charging head to span multiple charging contacts of the vehicle. For example, the extension may help prevent misalignment by allowing the charging head to ride over the charging contacts and align the charging head with the charging contacts.

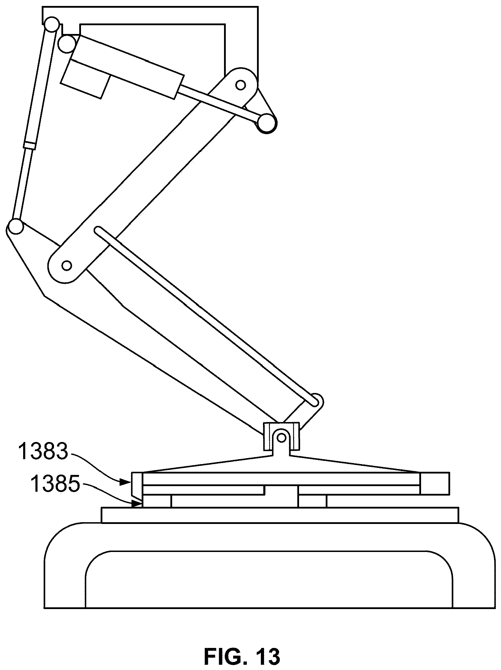

In one example, the charging head may include one or more stops. The stops may be a mechanical stop such as a protrusion, a bumper, a flange, a hook, or the like. The stop may be positioned to engage one or more portions of the vehicle. The stop may hook under the charging contacts to prevent the charging head from lifting due to the side forces. The hook may have an angled surface to create a downward clamping force to increase contact force when a side load is developed. In the embodiment illustrated in Figure 13, stop 1383 may be positioned on a trailing end of the charging head. In one example, the stop may be positioned to engage an end portion 1385 of the charging contacts, as shown in Figure 13.

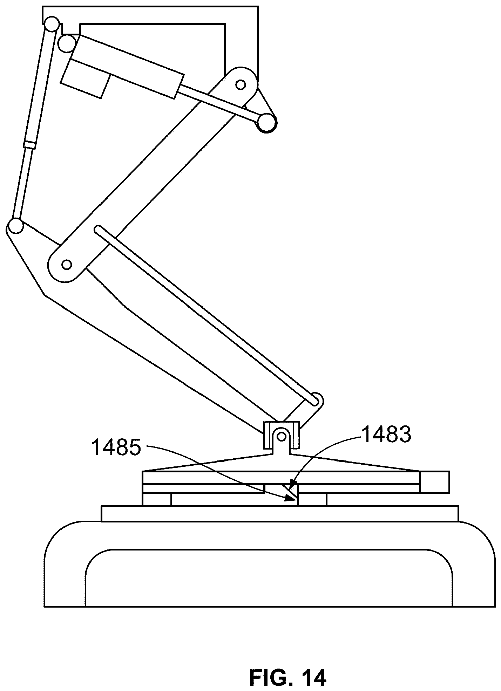

In the embodiment illustrated in Figure 14, stop 1483 may be positioned centrally on the charging head. The stop may engage an interior portion 1485 of the charging contacts.

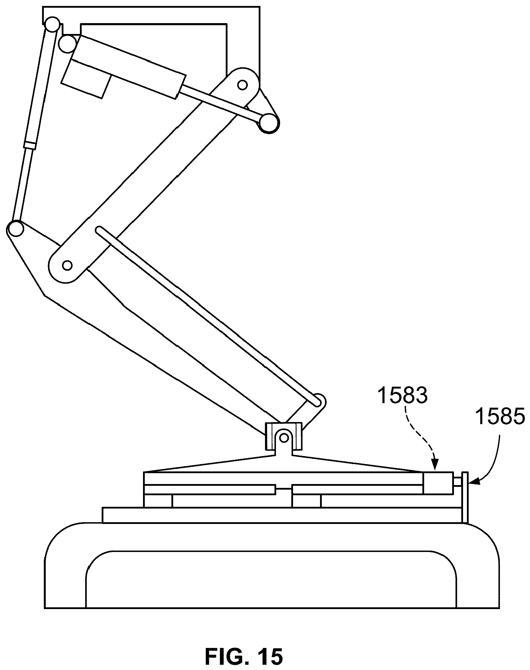

In the embodiment illustrated in Figure 15, stop 1583 may be positioned on a leading end of the charging head. The stop may engage a leading edge 1585 of the charging contacts.

The stop may stop the horizontal movement of the charging head. In one example, the stop may be positioned such that when the stop engages the portion of the vehicle, the charging head and the charging contacts may be properly aligned for charging. When the stop is reached a back force of the stop and the contact force may decouple the connection portion from the actuator. The decoupling of the connection portion may allow the actuator to continue to extend until the actuator reaches a fully extended position, without the charging head moving further.

The connection portion may provide an additional safety functionality to the charging assembly. In the event the vehicle may be greatly misaligned, the charging head may collide with the roof of the vehicle, rather than properly along the charging contacts. However, the connection portion may be decoupled from the force of the actuator, so the downward force may be provided only by the weight of the charging assembly. As a result, less force may be applied from the charging assembly, which may result in less damage to the vehicle.

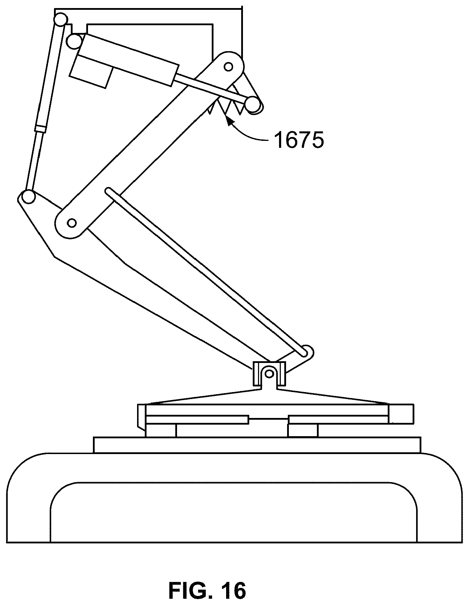

In the embodiment illustrated in Figure 16, the connection portion may include a biasing member 1675. In one example, the biasing member may be a spring, for example a tension or torsion spring. The biasing member may allow for some of the force from the actuator to be applied to create a counterclockwise torque on the upper arm. The counterclockwise torque may server multiple functions. Where the charging head initially engages the vehicle or the charging contacts, the counterclockwise torque may result in additional horizontal force applied to the charging head. This additional horizontal force may help the charging head overcome excessive force. Once the mechanical stops have been engaged, indicating proper placement of the charging head with respect to the charging contacts, the force from the biasing member may provide additional contact force for connection. This additional contact force may improve the electrical properties and efficiency of the charging connection.

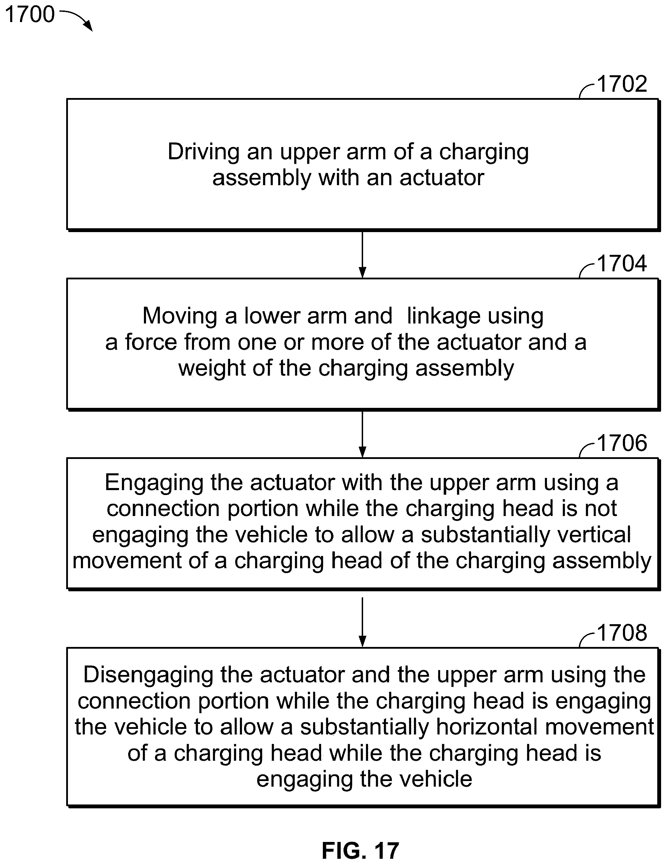

Figure 17 illustrates a flow chart of a method 1700 of moving a charging assembly to engage a vehicle, according to one example. The charging assembly may be coupled to a location along a route of the vehicle, for example a vehicle depot or a vehicle stop. The vehicle may be an automobile, a bus, a train, or the like.

At step 1702, the method may include driving an upper arm of the charging assembly with an actuator. The actuator may be one or more of a linear actuator, a rotary actuator, a pneumatic actuator, an electric actuator, a hydraulic actuator, or the like. In one example, the actuator may be an electric motor, a stepper motor, a telescopic hydraulic cylinder, a pulley, or the like. The actuator may provide controlled movements to, and positioning of, the charging assembly.

At step 1704, the method may include moving a lower arm and a linkage using a force from one or more of the actuator and a weight of the charging assembly. In one example, the linkage may be telescopic.

At step 1706, the method may include engaging the actuator with the upper arm using a connection portion while the charging head may not be engaging the vehicle. This may allow a substantially vertical movement of a charging head of the charging assembly. The engagement of the actuator with the upper arm by the connection member may allow a force or torque from the actuator to drive the charging assembly.

At step 1708, the method may include disengaging the actuator and the upper arm using the connection portion while the charging head may not be engaging the vehicle. This may allow a substantially horizontal movement of the charging head. The substantially horizonal movement of the charging assembly may allow engagement of a charging contact of the vehicle. Additionally, the substantially horizontal movement of the charging assembly may provide a wiping of the charging contact.

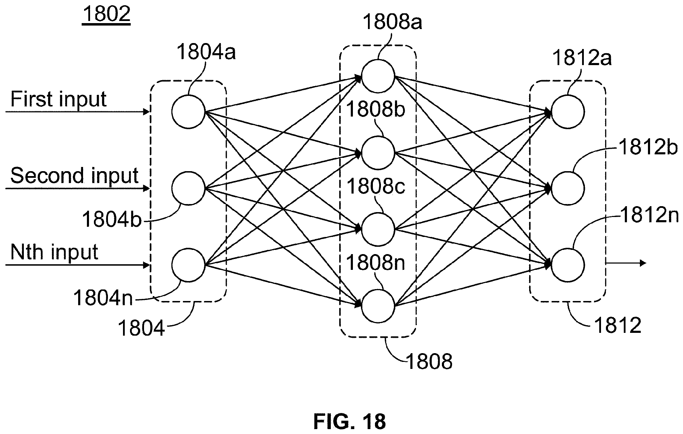

As previously stated, one or more of the charging assemblies or systems described herein may be implemented in an AI or machine-learning system. Figure 18 illustrates a functional block diagram of an example neural network 1802 that can be used by a charging system. The controller of the charging system may review various inputs, for example the position of the charging head, the position of the charging contacts, the strength of the connection between the charging head and the charging contacts, the capacity of the energy storage device, or the like. In an example, the neural network can represent a long short-term memory (LSTM) neural network. In an example, the neural network can represent one or more recurrent neural networks (RNN). The neural network may be used to implement the machine learning as described herein, and various implementations may use other types of machine learning networks. The neural network may include an input layer 1804, one or more intermediate or hidden layers 1208, and an output layer 1812. Each layer 1804, 1808, 1812 includes artificial individual units, or neurons. Each neuron can receive information (e.g., as input into the neural network 1802 or as received as output from another neuron in another layer or the same layer), process this information to generate output, and provide the output to another neuron or as output of the neural network 1802. The input layer 1804 may include several input neurons 1804a, 1804b ... 1804n. The hidden layer 1808 may include several intermediate neurons 1808a, 1808b, 1808c... 1808n. The output layer 1812 may include several output neurons outputs 1812a, 1812b... 1812n. The inputs may include, for example, charging head position, charging contact position, energy storage device capacity, or the like.

Each neuron can receive an input from another neuron and output a value to the corresponding output to another neuron (e.g., in the output layer 1812 or another layer). For example, the intermediate neuron 1808a can receive an input from the input neuron 1804a and output a value to the output neuron 1812a. Each neuron may receive an output of a previous neuron as an input. For example, the intermediate neuron 1808b may receive input from the input neuron 1804b and the output neuron 1812a. The outputs of the neurons may be fed forward to another neuron in the same or different intermediate layer 1808.

The processing performed by the neurons may vary based on the neuron, but can include the application of the various rules or criteria described herein to partially or entirely decide one or more aspects of the charging system, for example when and where to move the charging head, when and where to move the vehicle, when to prevent charging, when to initiate charging, or the like. The output of the application of the rule or criteria can be passed to another neuron as input to that neuron. One or more neurons in the intermediate and/or output layers 1808, 1812 can determine connections between one or more aspects of the charging system, for example that the position of the charging contacts requires the movement of the charging head to initiate charging. As used herein, a "connection" may refer to a preferred operation of the charging system based on the inputs, for example a position of the charging head and the charging contacts. The preferred operation may be based on increasing performance, efficiency, safety, longevity, or a combination of any or all of these factors. The last output neuron 1812n in the output layer 1812 may output a connection or no-connection decision. For example, the output from the neural network 1802 may be that the charging head needs to move based on the position of the charging contacts and/or vehicle. Although the input layer 1804, the intermediate layer(s) 1808, and the output layer 1812 are depicted as each including three artificial neurons, one or more of these layers may contain more or fewer artificial neurons. The neurons can include or apply one or more adjustable parameters, weights, rules, criteria, or the like, as described herein, to perform the processing by that neuron.

In various implementations, the layers of the neural network may include the same number of artificial neurons as each of the other layers of the neural network. For example, the position of the charging head, position of the charging contacts, or the like may be processed to provide information to the input neurons 1804a-1804n. The output of the neural network may represent a connection or no-connection of the inputs to the a given output. More specifically, the inputs can include historical charging data. The historical charging data can be provided to the neurons 1808a-1808n for analysis and connections between the historical charging data. The neurons 1808a-1808n, upon finding connections, may provide the potential connections as outputs to the output layer 1812, which can determine a connection, no connection, or a probability of a connection.

In some embodiments, the neural network 1802 may be a convolutional neural network. The convolutional neural network can include an input layer, one or more hidden or intermediate layers, and an output layer. In a convolutional neural network, however, the output layer may include one fewer output neuron than the number of neurons in the intermediate layer(s), and each neuron may be connected to each output neuron. Additionally, each input neuron in the input layer may be connected to each neuron in the hidden or intermediate layer(s).

Such a neural network-based charging system can be trained by operators, automatically self-trained by the charging system itself, or can be trained both by operators and by the charging system itself to improve how the system operates.

The AI or machine-learning processes may be used to generate or update the machine-learning models used by the artificial neurons to compare information from the sensor inputs with a charging database. A machine-learning model can be or include a mathematical representation of a relationship between sensor inputs and outputs (e.g., indications of a connection between sensor inputs and charging outcomes or indications of no connection between sensor inputs and charging outputs), as generated using the machine-learning processes described herein. An input is provided to one or more of the input neurons of the neural network after the model is created. The output neurons within the network generate an output based on the relationships that are derived or learned by the neurons in the intermediate or hidden layer(s) 1808. Connections between the nodes within each layer and/or between the layers 1804, 1808, 1812 and/or the neurons may be created via the process of training the charging system.

In contrast to some known artificial intelligence or machine learning systems that use supervised learning to train the systems or networks, one or more embodiments of the neural network of the charging systems described herein may use unsupervised learning to train the systems. For example, actual sensor inputs may be used as the production data that is input into the input neurons of the neural network for analysis and identification of connections by the neurons in the intermediate layer(s). These sensor inputs may not be known to connect (or not connect) to a charging outcome prior to inputting the sensor input into the charging system. Instead, the output from the neurons in the output layer of the system can be examined to determine whether the system-connected sensor inputs are correct connections of sensor inputs and charging outputs, incorrect connections of sensor inputs and charging outputs, or missed connections of sensor inputs and charging outputs, field experience may be used for direct machine learning. In one embodiment, the charging system can use manual corrections to learn and infer refinements to parameters and rules.

The analysis of the output can be performed by receiving output from the neuron(s) in the output layer indicating that a sensor input and charging output connect; examining the sensor inputs and the charging outputs to confirm or refute that the input and output do, in fact, align with each other; and generating feedback based on this examination.

The charging system can change (or have changed) one or more parts of the connecting rules or criteria used by the neurons in the intermediate layer(s) to examine the information, as described above. Weights or other parameters of the connecting rules or criteria used by these neurons may be modified to train the charging system to not over-connect or under-connect the sensor inputs and charging outputs going forward.

In one embodiment, a charging assembly is provided that may include a charging head, an actuator, a linkage, and a connection portion. The charging head may selectively engage a charging contact of a vehicle. The actuator may drive an upper arm. The connection portion may selectively couple the actuator and the upper arm. The linkage may be extendable and retractable in length. The linkage may be driven by one or more of the actuator and a weight of the charging assembly. The connection portion may engage the actuator and the upper arm while the charging head is not engaging the vehicle. The connection portion may allow a torque from the actuator to move the charging head in a substantially vertical direction. The connection portion may disengage the actuator from the upper arm while the charging head engages the vehicle. The connection portion may allow a force from the weight of the charging assembly to move the charging head.

In one example, while the charging head may engage the vehicle, movement of the charging head in the substantially horizontal direction may allow the charging head to engage the charging contact. A stop may be positioned on the charging head to engage an end portion of the charging contact. The stop may align the charging head and the charging contact. While the stop may be engaging the end portion, the actuator may move to an extended position without moving the charging head. The movement of the charging head in the substantially horizontal direction may allow wiping of the charging contact. In one example, the stop may include a hook feature that may engage the charging contact. The hook feature may prevent the stop from riding over the charging contact.

In one example, one or more sensors may detect an extended position of the actuator and a retracted position of the actuator. The charging head may include an extension. In one example, the connection portion may include a spring. The spring may be in series with the actuator to allow the actuator to extend while transmitting a portion of the actuator force to the upper arm that may provide one or more of a downward force and a rightward force to the charging head. The charging head may include conductor rails oriented substantially perpendicular to the conductive rails. The charging head may include one or more extending ramps. The one or more extending ramps may be positioned to align the conductor rails with the conductive rails.

In one example, the actuator may include one or more of a linear actuator, a rotary actuator, a pneumatic actuator, an electric actuator, or a hydraulic actuator. In one example, the charging contact may include conductive rails that are substantially parallel.

In one embodiment, a method of moving a charging assembly to engage a vehicle may include driving an upper arm of the charging assembly with an actuator. The method may include moving a lower arm and a linkage using one or more of the actuator or a weight of the charging assembly. The method may include engaging the actuator with the upper arm using a connection portion while the charging head is not engaging the vehicle to allow a vertical movement of a charging head of the charging assembly. The method may include disengaging the actuator and the upper arm using the connection portion while the charging head is engaging the vehicle to allow a horizontal movement of the charging head while the charging head is engaging the vehicle.

In one example, the method may include the substantially horizontal movement of the charging assembly allowing engagement of a charging contact of the vehicle. The method may include wiping the charging contact with the substantially horizontal movement of the charging assembly. The method may include aligning the charging head and the charging contacts using a stop on the charging head engaging an end portion of the charging contact. The method may further include sensing one or more electrical characteristics of at least one of the charging assembly and the charging contact. The method may include determining a connection strength of the charging assembly and the charging contact of the vehicle based on the one or more electrical characteristics.

In one embodiment, a charging assembly may include a charging head, an actuator, and a connection portion. The charging head may selectively engage a charging contact of a vehicle. The actuator may selectively drive an upper arm. The connection portion may selectively couple the actuator and the upper arm. The connection portion may couple the actuator and the upper arm while the charging head is not engaging the vehicle. The connection portion may allow a torque from the actuator to move the charging head in a substantially vertical direction. The connection portion may decouple the actuator from the upper arm while the charging head engages the vehicle. The connection portion may allow a force from a weight of the charging assembly to move the charging head.

In one example, the connection portion may include a spring. The spring may be configured to provide one or more of a downward force and a rightward force on the charging head.

In one example, while the charging head may engage the vehicle, movement of the charging head in the substantially horizontal direction may allow the charging head to engage the charging contact. The movement of the charging head in the substantially horizontal direction may allow wiping of the charging contact. A stop may be positioned on the charging head to engage an end portion of the charging contact. The stop may align the charging head and the charging contact. While the stop may be engaging the end portion, the actuator may move to an extended position without moving the charging head. In one example, the stop may include a hook feature that may engage the charging contact. The hook feature may prevent the stop from riding up over the charging contact.

In one embodiment, a charging assembly may include a charging head, an actuator, and a passive linkage. The charging head may be positioned to selectively engage a charging contact of a vehicle. The actuator may drive an upper arm. The passive linkage may be passively extendable and retractable in length. The passive linkage may include a stop that may limit movement of the passive linkage. The passive linkage may be passively driven by the upper arm and the actuator. A lower arm may be coupled to the upper arm, the passive linkage, and the charging head. The passive linkage may engage the stop to allow a torque from the actuator to move the charging head in a substantially vertical direction while the charging head may not be engaging the vehicle. The passive linkage may move away from the stop such that the torque on the lower arm may move the charging head in a substantially horizontal direction while the charging head may engage the vehicle.

In one example, the passive linkage may be telescopic. In one example, response to the charging head engaging the vehicle, movement of the charging head in the substantially horizontal direction may allow the charging head to engage the charging contact. The substantially horizontal movement of the charging head may allow wiping of the charging contact.

The charging assembly may include one or more sensors that may detect a position of the charging head with respect to a position of the charging contact. The one or more sensors may include one or more of a camera, a touch sensor, or a proximity sensor.

The actuator may include one or more of a linear actuator, a rotary actuator, a pneumatic actuator, an electric actuator, or a hydraulic actuator.

The charging contact may include conductive rails that may be substantially parallel. The charging head may include conductor rails that may be oriented substantially perpendicular to the conductive rails. The charging head may include one or more extending ramps. The one or more extending rams may be positioned to align the conductor rails with the conductive rails. The conductor rails may be aligned with spacers of the vehicle.

In one example, the stop may limit retraction of the passive linkage. The stop may limit extension of the passive linkage.

In one embodiment, a charging assembly may include a charging head, an actuator, and a linkage. The charging head may be positioned to selectively engage a charging contact of a vehicle. The actuator may drive an upper arm. The linkage may be extendable and retractable in length. The linkage may include a stop to limit the movement of the linkage. A lower arm may be coupled to the upper arm, the linkage, and the charging head. The linkage may allow a torque from the actuator to move the charging head in a substantially vertical direction while the charging head may not be engaging the vehicle. The linkage may extend or retract to allow torque on the lower arm to move the charging head in a substantially horizontal direction while the charging head may be engaging the vehicle.

In one example, the linkage may be telescopic. In one example, the linkage may include a linkage actuator that may drive the linkage. A solenoid may control movement of the linkage. A spring may passively provide a bias force. In one example, the linkage actuator may be a hydraulic actuator.

In one example, while the charging head may engage the vehicle, movement of the charging head in the substantially horizontal direction may allow the charging head to engage the charging contact. The movement of the charging head may allow wiping of the charging contact.

In one embodiment, a method of moving a charging assembly to engage a vehicle may include driving an upper arm of the charging assembly with an actuator. The method may include moving a lower arm and a passive linkage using the force from the upper arm and the actuator. The method may include extending or retracting the passive linkage using the force from the upper arm and the actuator. The method may include engaging a stop of the passive linkage to allow a substantially vertical movement of a charging head of the charging assembly while the charging head may not be engaging the vehicle. The method may include moving the passive linkage away from the stop to allow a substantially horizontal movement of the charging head while the charging head may be engaging the vehicle.

The method may include the substantially horizonal movement of the charging assembly allowing engagement of a charging contact of the vehicle. In one example, the method may include wiping the charging contact with the substantially horizontal movement of the charging assembly. In one example, the method may include telescoping the passive linkage while the charging assembly may be engaging the vehicle.

In one embodiment, a method of moving a charging assembly to engage a vehicle is provided that may include driving an upper arm of the charging assembly with an actuator. The method may include moving a lower arm and a passive linkage using the force from the upper arm and the actuator. The method may include extending or retracting the passive linkage using the force from the upper arm and the actuator. The method may include sensing one or more electrical characteristics of the charging assembly. The method may include engaging a stop of the passive linkage to allow a substantially vertical movement of a charging head of the charging assembly responsive to the one or more electrical characteristics meeting one or more designated criteria. The method may include moving the passive linkage away from the stop to allow a substantially horizontal movement of the charging head responsive to the one or more electrical characteristics meeting one or more second designated criteria.

In one example, the substantially horizontal movement of the charging assembly may engage a charging contact of the vehicle for charging the vehicle. In one example, the one or more first designated criteria may include the one or more electrical characteristics being below a threshold, and the one or more second designated criteria may include the one or more electrical characteristics being at or above the threshold. In one example, the threshold may be a lower threshold. The method may further include wiping the charging contract with the substantially horizontal movement of the charging assembly responsive to the one or more electrical characteristics being at or above the lower threshold but below an upper threshold.

The method may further include determining a connection strength of the charging assembly and the charging contact of the vehicle based on the one or more electrical characteristics. In one example, the one or more electrical characteristics may include one or more of a resistance of the charging assembly or a current of the actuator.

The method may further include sensing an electrical or physical characteristic of the passive linkage or the actuator. The method may include detecting a position of the charging assembly relative to the vehicle based on at least one of the electrical or physical characteristic of at least one of the passive linkage or the actuator. In one example, the method may include providing a force from a spring to bias the passive linkage in one of an extended position or in a retracted position.

In one embodiment, a method of moving a charging assembly to engage a vehicle is provided that may include driving an upper arm of the charging assembly with an actuator. The method may include moving a lower arm and a passive linkage using the force from the upper arm and the actuator. The method may include extending or retracting the passive linkage using the force from the upper arm and the actuator. The method may include sensing one or more electrical characteristics of the charging assembly. The method may include implementing one or more responsive actions to control operation of the charging assembly based on the one or more electrical characteristics.

The one or more responsive actions may include engaging a stop of the passive linkage to allow a substantially vertical movement of a charging head of the charging assembly responsive to the one or more electrical characteristics being below a first threshold. The one or more responsive actions may include moving the passive linkage away from the stop to allow a substantially horizontal movement of the charging head responsive to the one or more electrical characteristics being at or above the first threshold. The method may include the substantially horizontal movement of the charging assembly engaging a charging contact of the vehicle for charging of the vehicle. The responsive action may include wiping the charging contact with the substantially horizontal movement of the charging assembly.

The method may include determining a connection strength of the charging assembly and the charging contact of the vehicle based on the one or more electrical characteristics. The one or more electrical characteristics may include one or more of a resistance of the charging assembly or a current of the actuator.

In one embodiment, a charging assembly is provided that may include a charging head, a controller, and a first sensor. The charging head may selectively engage a charging contact of a vehicle. The charging head may transfer electric current to the charging contact while the charging head may be engaging the charging contact. The controller may move the charging head in a substantially vertical direction while the charging head may not be engaging the vehicle. The controller may move the charging head in a substantially horizontal direction while the charging head may engage the vehicle. The first sensor may sense one or more electrical characteristics of the charging head. The controller may implement one or more responsive actions to control movement of the charging head based on the one or more electrical characteristics.

In one example, the responsive actions may include moving the charging head responsive to the one or more electrical characteristics being below a lower threshold. The responsive actions may include stopping movement of the charging head responsive to the one or more electrical characteristics being at or above a lower threshold.

In one example, the controller may direct a wiping of the charging contact by the charging head responsive to the one or more electrical characteristics being at or above a lower threshold but below an upper threshold. The one or more electrical characteristics of the charging head may include a resistance.

In one example, responsive to the charging head may engage the vehicle, movement of the charging head in the substantially horizontal direction may allow the charging head to engage the charging contact for charging the vehicle. The movement of the charging head in the substantially horizontal direction may allow a wiping of the charging contact. In one example, one or more second sensors may detect a position of the charging head with respect to a position of the charging contact. The one or more second sensors may include one or more of a camera, a touch sensor, or a proximity sensor.

In one embodiment, a method of moving a charging assembly to engage a vehicle is provided that may include sensing one or more electrical characteristics of a charging head of the charging assembly. The method may include moving the charging head first vertically and then horizontally to engage a charging contact of the vehicle until the one or more electrical characteristics indicate the charging head is in electrical charging communication with the charging contact. The method may include subsequently moving the charging head to wipe back and forth along the charging contact responsive to the one or more electrical characteristics meeting one or more second designated criteria.

As used herein, an element or step recited in the singular and proceeded with the word "a" or "an" do not exclude the plural of said elements or operations, unless such exclusion is explicitly stated. Furthermore, references to "one embodiment" of the invention do not exclude the existence of additional embodiments that incorporate the recited features. Moreover, unless explicitly stated to the contrary, embodiments "comprising," "comprises," "including," "includes," "having," or "has" an element or a plurality of elements having a particular property may include additional such elements not having that property. In the appended claims, the terms "including" and "in which" are used as the plain-English equivalents of the respective terms "comprising" and "wherein." Moreover, in the following claims, the terms "first," "second," and "third," etc. are used merely as labels, and do not impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function devoid of further structure.

Use of phrases such as "one or more of ... and," "one or more of ... or," "at least one of ... and," and "at least one of ... or" are meant to encompass including only a single one of the items used in connection with the phrase, at least one of each one of the items used in connection with the phrase, or multiple ones of any or each of the items used in connection with the phrase. For example, "one or more of A, B, and C," "one or more of A, B, or C," "at least one of A, B, and C," and "at least one of A, B, or C" each can mean (1) at least one A, (2) at least one B, (3) at least one C, (4) at least one A and at least one B, (5) at least one A, at least one B, and at least one C, (6) at least one B and at least one C, or (7) at least one A and at least one C.

The above description is illustrative, and not restrictive. For example, the above-described embodiments (and/or aspects thereof) may be used in combination with each other. In addition, many modifications may be made to adapt a particular situation or material to the teachings of the subject matter without departing from its scope. While the dimensions and types of materials described herein define the parameters of the subject matter, they are exemplary embodiments. Other embodiments will be apparent to one of ordinary skill in the art upon reviewing the above description. The scope of the subject matter should, therefore, be determined with reference to the appended claims, along with the full scope of equivalents to which such claims are entitled.

This written description uses examples to disclose several embodiments of the subject matter, including the best mode, and to enable one of ordinary skill in the art to practice the embodiments of subject matter, including making and using any devices or systems and performing any incorporated methods. The patentable scope of the subject matter is defined by the claims, and may include other examples that occur to one of ordinary skill in the art. Such other examples are intended to be within the scope of the claims if they have structural elements that do not differ from the literal language of the claims, or if they include equivalent structural elements with insubstantial differences from the literal languages of the claims.

## Claims

1. A charging assembly, comprising:
a charging head configured to selectively engage a charging contact of a vehicle;
an actuator configured to drive an upper arm;
a linkage configured to be extendable and retractable in length, the linkage configured to be driven by one or more of the actuator or a weight of the charging assembly; and
a connection portion configured to selectively couple the actuator and the upper arm, the connection portion configured to engage the actuator and the upper arm responsive to the charging head not engaging the vehicle, the connection portion configured to allow a torque from the actuator to move the charging head in a substantially vertical direction,
the connection portion configured to disengage the actuator from the upper arm responsive to the charging head engaging the vehicle, the connection member configured to allow a force from the weight of the charging assembly to move the charging head in a substantially horizontal direction.

2. The charging assembly of claim 1, wherein movement of the charging head in the substantially horizontal direction results in the charging head engaging the charging contact.

3. The charging assembly of claim 1, further comprising a stop on the charging head, wherein the stop is configured to engage a protrusion of the charging contact to stop movement of the charging head in the substantially horizontal direction.

4. The charging assembly of claim 3, wherein the stop is configured to align the charging head and the charging contact by engaging the protrusion of the charging contact.

5. The charging assembly of claim 3, wherein the actuator is configured to move to an extended position without moving the charging head responsive to the stop engaging the end portion of the charging contact.

6. A method of moving a charging assembly to engage a vehicle, the method comprising:
driving an upper arm of the charging assembly with an actuator;
moving a lower arm and a passive linkage using a force from the upper arm and the actuator;
extending or retracting the passive linkage using the force from the upper arm and the actuator;
sensing one or more electrical characteristics of the charging assembly;
engaging a stop of the passive linkage to allow a substantially vertical movement of a charging head of the charging assembly responsive to the one or more electrical characteristics meeting one or more first designated criteria; and
moving the passive linkage away from the stop to allow a substantially horizontal movement of the charging head responsive to the one or more electrical characteristics meeting one or more second designated criteria.

7. The method of claim 6, wherein the substantially horizontal movement of the charging assembly engages a charging contact of the vehicle for charging the vehicle.

8. The method of claim 7, further comprising determining a connection strength of the charging assembly and the charging contact of the vehicle based on the one or more electrical characteristics.

9. The method of claim 6, wherein the one or more electrical characteristics includes one or more of a resistance of the charging assembly or a current of the actuator.

10. The method of claim 6, further comprising sensing an electrical or physical characteristic of at least one of the passive linkage or the actuator.

11. A charging assembly, comprising:
a charging head configured to selectively engage a charging contact of a vehicle;
an actuator configured to drive an upper arm;
a passive linkage that is passively extendable and retractable in length, the passive linkage including a stop to limit movement of the passive linkage, the passive linkage configured to be passively driven by the upper arm and the actuator; and
a lower arm coupled to the upper arm, the passive linkage, and the charging head,
the passive linkage configured to engage the stop to allow a torque from the actuator to move the charging head in a substantially vertical direction while the charging head is not engaging the vehicle,
the passive linkage configured to move away from the stop such that the torque on the lower arm moves the charging head in a substantially horizontal direction while the charging head engages the vehicle.

12. The charging assembly of claim 11, wherein the passive linkage is telescopic.

13. The charging assembly of claim 11, wherein while the charging head engages the vehicle, movement of the charging head in the substantially horizontal direction allows the charging head to engage the charging contact and allows wiping of the charging contact.

14. The charging assembly of claim 11, further comprising one or more sensors configured to detect a position of the charging head with respect to a position of the charging contact.

15. The charging assembly of claim 14, wherein the one or more sensors include one or more of a camera, a touch sensor, or a proximity sensor.
